# EUROPÄISCHE PATENTANMELDUNG

(11) **EP 4 485 276 A1**
(43) Veröffentlichungstag der Anmeldung: **01.01.2025**
(21) Anmeldenummer: 23181477.3
(22) Anmeldetag: 26.06.2023
(51) Int. Cl.: G06N 3/0455, G06N 3/0464, G06N 3/09

(54) **VERFAHREN ZUM TRAINIEREN EINER KÜNSTLICHEN INTELLIGENZ FÜR DIE ERZEUGUNG EINER TRAJEKTORIENPLANUNG EINER TRAJEKTORIE EINES FAHRZEUGS MITTELS EINER ELEKTRONISCHEN RECHENEINRICHTUNG**

(71) Anmelder: Siemens Aktiengesellschaft, 80333 München (DE)
(72) Erfinder: Fruhnert, Michael, 12437 Berlin (DE); Haber, Jad, 13409 Berlin (DE); Hein, Daniel, 81549 München (DE); Seydenschwanz, Martin, 99096 Erfurt (DE); Weber, Marc Christian, 80339 München (DE)
(74) Vertreter: Siemens Patent Attorneys

(57) **Zusammenfassung**

Die Erfindung betrifft ein Verfahren zum Trainieren einer künstlichen Intelligenz (18) für die Erzeugung einer Trajektorienplanung (16) einer Trajektorie eines Fahrzeugs (14) mittels einer elektronischen Recheneinrichtung (10, 12), mit den Schritten:
- Empfangen von statischen Daten (20 ,22) der Trajektorie und dynamischen Daten (24) der Trajektorie mittels der elektronischen Recheneinrichtung (10, 12);
- Auswerten der statischen Daten (20, 22) und der dynamischen Daten (24) mittels eines mathematischen Optimierungsverfahrens (26) mittels der elektronischen Recheneinrichtung (10, 12) ;
- Übermitteln der empfangenen Daten (20, 22, 24) und der ausgewerteten Daten (32) als Trainingsdaten (34) an die künstliche Intelligenz (18) mittels der elektronischen Recheneinrichtung (10 ,12); und
- Trainieren der künstlichen Intelligenz (18) mit den übermittelten Trainingsdaten (34) mittels der elektronischen Recheneinrichtung (10, 12).

Ferner betrifft die Erfindung eine elektronische Recheneinrichtung (10, 12), ein Computerprogrammprodukt, ein computerlesbares Speichermedium.

## Beschreibung

Die Erfindung betrifft ein Verfahren zum Trainieren einer künstlichen Intelligenz für die Erzeugung einer Trajektorienplanung einer Trajektorie eines Fahrzeugs mittels einer elektronischen Recheneinrichtung.

Ferner betrifft die Erfindung ein Verfahren zum Betreiben eines Fahrzeugs mittels einer künstlichen Intelligenz, welche nach dem vorhergehenden Aspekt trainiert ist. Insbesondere betrifft somit die Erfindung eine Verwendung der künstlichen Intelligenz. Des Weiteren betrifft die Erfindung ein Computerprogrammprodukt mit Programmcodemitteln, ein computerlesbares Speichermedium sowie eine elektronische Recheneinrichtung.

Eine optimale Trajektorienplaung ist ein wichtiges und komplexes Problem im schnelllebigen Bereich des automatisierten Fahrens und der Entscheidungsfindung, sei es für Drohnen in der Luft, Fahrzeuge beziehungsweise Autos auf der Straße oder Schienenfahrzeuge. Eine der größten Herausforderungen bei der Optimierung von Bewegungstrajektorien besteht in einer großen Anzahl von Eingabeparametern und Randbedingungen, welche mehreren Optimierungszielen und der Notwendigkeit, Trajektorien bei unvorhergesehenen Störungen, zum Beispiel rote Signale entlang von Bahngleisen, innerhalb weniger Sekunden oder je nach Anwendung sogar viel schneller zu berechnen beziehungsweise erneut zu berechnen.

Die Trajektorienplanung und Optimierung von Trajektorien im Allgemeinen ist ein ausgereiftes Forschungsthema in der Mathematik und Informatik mit praktikablen Lösungen und Anwendungen in zahlreichen Bereichen. Der erste Schritt besteht in der Regel in der Erstellung eines physikalischen Modells der relevanten Kräfte, die beispielsweise auf das Fahrzeug entlang einer bestimmten Strecke wirken, sowie der erforderlichen Eigenschaften von Motor- und Bremssystemen, um die erwartete Bewegungsbahn zu bestimmen. Angesichts eines solchen Modells gibt es eine Vielzahl von mathematischen Werkzeugen und Verfahren zur Lösung des zugehörigen optimalen Steuerungsproblems, das heißt der Suche nach einer Folge von beispielsweise Beschleunigungssignalen oder Bremssignalen, die eine optimale Leistung in Bezug auf eine vordefinierte Kostenfunktion ergibt.

Die sich daraus ergebenden optimalen Steuerungsprobleme für alle Anwendungen sind in der Regel nicht konvex und können auch keine diskreten Entscheidungen beinhalten. Darüber hinaus führt die Diskretisierung des Raum- oder Zeitbereichs für die numerischen Lösungen mit etablierter Server-Software in der Regel zu einer hohen Dimensionalität für die praktische Anwendung der vorliegenden feinkörnigen Auflösungen.

Während mathematische Optimierungsmethoden in der Regel solide und robuste Methoden zur Ermittlung der optimalen Flugbahn, Route beziehungsweise Trajektorie darstellen, können die oben genannten Gründe zu längeren Berechnungszeiten und/oder hohen Rechenanforderungen führen. Beide Bedingungen sind einschränkende Faktoren für eine Online-Berechnung innerhalb des Fahrzeugs in Steuerungssystemen für reale Anwendungen.

Versuche, komplexe Optimierungsalgorithmen durch lernfähige Verfahren des maschinellen Lernens zu ersetzen, gibt es zwar auch, doch leiden sie in der Regel unter der hohen Dimensionalität und Vielfalt der Informationen, die zur vollständigen Beschreibung der Problemstellung erforderlich sind.

Aufgabe der vorliegenden Erfindung ist es, ein Verfahren zum Trainieren einer künstlichen Intelligenz, ein Verfahren zum Bereitstellen der künstlichen Intelligenz, ein Computerprogrammprodukt, ein computerlesbares Speichermedium sowie eine elektronische Recheneinrichtung zu schaffen, mittels welchen eine verbesserte Trajektorienplanung für ein Fahrzeug durchgeführt werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Trainieren einer künstlichen Intelligenz für die Erzeugung einer Trajektorienplanung einer Trajektorie eines Fahrzeugs mittels einer elektronischen Recheneinrichtung. Es erfolgt das Empfangen von statischen Daten der Trajektorie und dynamischen Daten der Trajektorie mittels der elektronischen Recheneinrichtung. Es werden die statischen Daten und die dynamischen Daten mittels eines mathematischen Optimierungsverfahrens mittels der elektronischen Recheneinrichtung ausgewertet. Es erfolgt das Übermitteln der empfangenen Daten und der ausgewerteten Daten als Trainingsdaten an die künstliche Intelligenz mittels der elektronischen Recheneinrichtung und das Trainieren der künstlichen Intelligenz mit den übermittelten Trainingsdaten mittels der elektronischen Recheneinrichtung.

Beispielsweise wird vorliegend der Schwerpunkt auf den Bereich von Schienenfahrzeugen, zum Beispiel Lang- und Kurzstreckenzüge, Straßenbahnen und U-Bahnen gelegt, ohne dass dies auf andere oben genannte potenzielle Anwendungen, wie beispielsweise Autos, Drohnen oder Flugzeuge, nicht übertragbar wäre und somit auch bei diesen Fahrzeugen Anwendung finden kann. Die allgemeine Problemstellung besteht darin, eine Folge von Beschleunigungs-/Bremssignalen zur Steuerung des Zuges zu finden, die im Hinblick auf gegebene Leistungsmaße, beispielsweise Fahrtzeit und Energieverbrauch, die entlang eines bevorstehenden Streckenabschnitts/Trajektorie akkumuliert werden, im Wesentlichen optimal ist. Um diese Probleme zu lösen, sind alle relevanten Informationen über den Fahrzeugzustand, die Strecke und andere Randbedingungen, wie zum Beispiel Geschwindigkeitsbegrenzungen entlang der Strecke, bekannt, bevor die Optimierungsaufgabe gestartet wird.

Es wird insbesondere eine neue Methode zur Verknüpfung etablierter mathematischer Optimierungsverfahren mit künstlicher Intelligenz-basierter Modellierung vorgeschlagen, die zu einer signifikanten Verbesserung der Gesamtlaufzeit der Optimierung führt und somit neue Anwendungspotentiale ermöglicht. Als Kernmerkmal der Komponente der künstlichen Intelligenz adressiert diese Erfindung die Herausforderung der großen Problemdimensionalität, die typischerweise mit dieser Aufgabe einhergeht.

Insbesondere besteht das Ziel der vorliegenden Erfindung darin, das Problem der langen Rechenzeiten und der großen Rechenressourcen zu überwinden, die in der Regel für die Lösung des Trajektorienoptimierungsproblems in Echtzeit erforderlich sind und die solche Lösungen in einigen realen Szenarien unpraktisch machen, zum Beispiel bei unvorhergesehenen Änderungen des Zugfahrplans. Solche Ereignisse machen es erforderlich, die gesamte Sequenz des optimalen Beschleunigungssignals neu zu berechnen, sodass beispielsweise ein Zugführer oder auch ein automatisiertes Fahrsystem diese Befehle anwenden kann, um künftige Verspätungen zu minimieren und gleichzeitig den Energieverbrauch oder andere Kennzahlen zu senken.

Insbesondere erfolgt somit die Lösung darin, dass die entsprechenden statischen Daten der Trajektorie und dynamischen Daten der Trajektorie, insbesondere offline, der elektronischen Recheneinrichtung bereitgestellt werden, wobei die elektronische Recheneinrichtung offline dann auf Basis des mathematischen Optimierungsverfahrens diese entsprechend auswertet. Es werden dann wiederum die statischen Daten der Trajektorie und die dynamischen Daten der Trajektorie als Eingangsparameter für die künstliche Intelligenz genutzt genauso wie die bereits ausgewerteten Daten des Optimierungsverfahrens ebenfalls für die künstliche Intelligenz genutzt werden. Auf Basis der statischen Daten und der dynamischen Daten der Trajektorie als Eingangsparameter und der bereits über das mathematische Optimierungsverfahren ausgewerteten Daten kann wiederum die künstliche Intelligenz entsprechend angelernt werden, insbesondere ein sogenannter Konstruktionsfehler entsprechend minimiert werden, wodurch diese angelernte künstliche Intelligenz dann später insbesondere online im Fahrzeug genutzt werden kann.

Insbesondere sieht der neue Ansatz somit vor, dass die in der klassischen Optimierungsschleife erzeugten Eingangs- und Ausgangsdaten genutzt werden, indem die entsprechenden Sätze von Problembeschreibung und die daraus resultierenden optimalen Beschleunigungskurven in einem Datenspeicher gespeichert werden. Es wird dann die künstliche Intelligenz trainiert, die wiederum in der Lage ist, die optimalen Beschleunigungskurven für jede beliebige Kombination von Problembeschreibungsmerkmalen zu reproduzieren. Das Training eines solchen KI-Modells erfordert ebenfalls eine Menge Rechenleistung und Trainingsdaten. Daher wird dies ebenfalls offline durch die elektronische Recheneinrichtung ausgeführt.

Der Hauptvorteil dieses Ansatzes wird deutlich, sobald das Training der künstlichen Intelligenz abgeschlossen ist und das angelernte Modell beispielsweise in das ressourcenkritische Steuerungs-/Betriebssystem des Fahrzeugs, als weitere elektronische Recheneinrichtung, eingesetzt wird. Hier kann das einzige Modell sehr schnell ausgeführt werden, um ein im Wesentlichen optimales Beschleunigungssteuersignal für die gegebenen Eingangs- und Randparameter der aktuellen Situation zu reproduzieren.

Gemäß einer vorteilhaften Ausgestaltungsform ist vorgesehen, dass Streckeninformationen der Trajektorie als statische Daten empfangen werden. Beispielsweise können Geschwindigkeitsbegrenzungen auf der Strecke, entsprechende Neigungen, insbesondere Höhenunterschiede, und der gleichen als entsprechende Streckeninformationen übertragen werden, wodurch auf Basis dessen wiederum das Optimierungsverfahren durchgeführt wird. Somit kann die künstliche Intelligenz entsprechend angelernt werden.

Ferner hat es sich als vorteilhaft erwiesen, wenn Fahrzeuginformationen des Fahrzeugs als statische Daten empfangen werden. Beispielsweise können entsprechende Motordaten bezüglich der Beschleunigung beziehungsweise des Bremsverhaltens sowie Gewicht und Länge als statische Daten genutzt werden, wodurch eine verbesserte Optimierung der Trajektorienplanung durchgeführt werden kann.

Eine weitere vorteilhafte Ausgestaltungsform sieht vor, dass ein Zeitplan für die Trajektorie und/oder Zeitplangrenzen für die Trajektorie als dynamische Daten empfangen werden. Insbesondere können somit beispielsweise Startzeiten sowie Ankunftszeiten entsprechend berücksichtigt werden. Des Weiteren können Grenzen beziehungsweise Flexibilitäten mitberücksichtigt werden, sodass eine entsprechende Optimierung der Trajektorienplanung auch auf Basis des Zeitplans und der flexiblen Zeitgrenzen durchgeführt werden kann.

In einer weiteren vorteilhaften Ausgestaltungsform ist vorgesehen, dass die Trajektorie bezüglich einer maximalen Bremseffizienz des Fahrzeugs und/oder einer minimalen Abweichung eines Zeitplans und/oder eines minimalen Energieverbrauchs des Fahrzeugs auf der Trajektorie mittels des Optimierungsverfahrens optimiert wird. Insbesondere handelt es sich somit um sogenannte Key-Performance-Indikatoren, welche auf Basis des mathematischen Verfahrens entsprechend optimiert werden. Insbesondere können diese beispielsweise vordefiniert sein. Da diese Art der Optimierung in der Regel ressourcenintensiv ist und bis zu mehreren Minuten oder länger dauern kann, wird diese offline mittels der elektronischen Recheneinrichtung und insbesondere mittels eines leistungsfähigen Rechenservers entsprechend durchgeführt.

Weiterhin vorteilhaft ist, wenn die künstliche Intelligenz für ein als Zug ausgebildetes Fahrzeug bereitgestellt wird. Insbesondere bei Zügen sind entsprechende Randbedingungen, wie beispielsweise ein Zeitplan sowie Beschleunigungswerte, einzuhalten, um möglichst ressourcenschonend und dennoch innerhalb der zeitlichen Grenzen eine Trajektorienplanung durchzuführen.

Ferner hat es sich als vorteilhaft erwiesen, wenn für die Trajektorienplanung zumindest ein Beschleunigungswert für den Zug mittels der künstlichen Intelligenz ausgegeben wird. Insbesondere die Beschleunigungen sind entsprechend energieverbrauchend und können angepasst werden, um eine verbesserte Trajektorienplanung für den Zug bereitzustellen. Insbesondere können entsprechende Beschleunigungswerte beispielsweise auf einer Ausgabeeinrichtung des Zugs ausgegeben werden, sodass ein Fahrzeugführer die entsprechenden Beschleunigungswerte durchführen kann. Alternativ oder ergänzend, sollte beispielsweise der Zug als zumindest teilweise automatisiert beziehungsweise vollautomatisiert ausgebildet sein, können die entsprechenden Beschleunigungswerte auch an ein Steuerungssystem des Zugs übergeben werden, sodass auf Basis dessen wiederum der Zug entsprechend beschleunigt werden kann.

Eine weitere vorteilhafte Ausgestaltungsform sieht vor, dass die künstliche Intelligenz als faltendes neuronales Netzwerk bereitgestellt wird. Insbesondere ist die künstliche Intelligenz somit als Convolutional Neuronal Network (CNN) bereitgestellt. Dabei kann ferner vorgesehen sein, dass das faltende neuronale Netzwerk als sogenannter Autoencoder bereitgestellt wird. Der Autoencoder weist dabei insbesondere einen Encoder sowie einen Decoder auf. Insbesondere besteht somit die Idee darin, eine Autoencoder-Modellstruktur zu verwenden, die aus zwei Einheiten eines faltungsneuronalen Netzes ausgebildet ist, die als Encoder/Decoder für große Zeitreiheninformationen fungieren, wie zum Beispiel zeitlich gerasterte Beschleunigungssignale oder Gleisgradientenprofile. Der Autoencoder wird durch Minimierung des Signalrekonstruktionsverlusts trainiert, der sich aus einem punkteweisen Vergleich der Eingangs- und Ausgangssignale ergibt. Im Autoencoder-Modell sind der Encoder und der Decoder sogenannte vertauschte Einheiten, diese sollten beispielsweise die gleiche Anzahl von Faltungsschichten in umgekehrter Reihenfolge haben und bestimmte Schichtungseigenschaften, wie die Kerngröße, teilen, um die Dimensionsidentität des Eingangs- und Ausgangssignalvektors zu gewährleisten. Bei erfolgreichem Training dient der Autoencoder als Datenkompressor - mit allen notwendigen Informationen, die zur Rekonstruktion des ursprünglichen Signals benötigt werden, codiert in seinem niedrigdimensionalen, latenten Raum. Dasselbe Verfahren und dieselbe Lernarchitektur können dann auch auf andere vektorähnliche Eingabemerkmale des Optimierungsproblems angewandt werden, zum Beispiel Gleisgradienten, Geschwindigkeitsbegrenzung entlang der Strecke oder eine Liste von Durchfahrtszeitbeschränkungen für die Zugtrajektorie. Nach dem Trainieren der einzelnen Autoencoder-Module für vektorähnliche Eingangsmerkmale wird das kombinierte Modell der künstlichen Intelligenz eine Trajektorien- beziehungsweise Trajektorienoptimierung durchführen.

Ein weiterer Aspekt der Erfindung betrifft ein Verfahren zum Betreiben eines Fahrzeugs mittels einer künstlichen Intelligenz, welche nach dem vorhergehenden Aspekt trainiert ist. Insbesondere betrifft somit die Erfindung auch eine Verwendung der künstlichen Intelligenz innerhalb des Fahrzeugs. Insbesondere wird somit die künstliche Intelligenz beispielsweise offline trainiert und online dann im Fahrzeug verwendet.

Eine vorteilhafte Ausgestaltungsform dieses Aspekts sieht vor, dass ein aktueller Trajektorienparameter der Trajektorie erfasst wird und eine Anpassung der Trajektorienplanung in Abhängigkeit von dem erfassten Trajektorienparameter mittels der künstlichen Intelligenz durchgeführt wird. Insbesondere kann beispielsweise die künstliche Intelligenz bereits nahe am Optimum erzeugte Parameter, beispielsweise Beschleunigungsparameter, bereitstellen. Diese können bereits genutzt werden, um eine entsprechende Trajektorienplanung anzupassen. Als Trajektorienparameter können beispielsweise entsprechende Zeitenänderungen beziehungsweise Signaländerungen sowie ein nicht vorhergesagtes Abbrems- oder Beschleunigungsmanöver angesehen werden. Somit ist es ermöglicht, dass online bereits mittels der künstlichen Intelligenz eine Trajektorienplanung entsprechend angepasst werden kann. Insbesondere kann somit das angelernte Modell in das ressourcenkritische Steuerungsbeziehungsweise Betriebssystem des Fahrzeugs eingesetzt werden. Hier kann das eingesetzte Modell sehr schnell ausgeführt werden, um ein im Wesentlichen optimales Beschleunigungssteuersignal für die gegebenen Eingangs- und Randparameter der aktuellen Situation zu reproduzieren. Da die künstliche Intelligenz bereits typischerweise eine Annäherung an die realen Lernziele, dem so genannten Ground Truth, liefert, hängt es wiederum von der Genauigkeit der künstlichen Intelligenz ab, ob die ausgegebene Beschleunigungssequenz direkt vom Kontrollsystem beziehungsweise Fahrzeug/Zug verwendet wird. Insbesondere kann somit das Verfahren bereits dazu genutzt werden, die ansonsten zeitaufwendige Optimierung und große Faktoren zu beschleunigen. Dies kann dazu beitragen, dass präzise Optimierungsalgorithmen auch auf leistungsschwächeren, beispielsweise Edge-/Hardware, wie zum Beispiel Low-Level-Beschleunigungs-/Bremsreglern, durchführbar sind.

Ferner hat es sich als vorteilhaft erwiesen, wenn auf Basis der angepassten Trajektorienplanung ein weiteres Optimierungsverfahren zur weiteren Anpassung der Trajektorie durchgeführt wird. Insbesondere kann somit die über die künstliche Intelligenz bereitgestellte Trajektorienplanung als Startparameter für ein weiteres Optimierungsverfahren dienen. Somit können die Näherungswerte der künstlichen Intelligenz dazu genutzt werden, um weiter optimiert zu werden. Dadurch kann eine noch präzisere Steuerung des Fahrzeugs beziehungsweise noch präzisere Trajektorienplanung durchgeführt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem ersten Aspekt der Erfindung und/oder ein Verfahren nach dem zweiten Aspekt der Erfindung durchzuführen.

Ebenfalls betrifft die Erfindung auch ein computerlesbares Speichermedium mit einem Computerprogrammprodukt nach dem vorherigen Aspekt.

Ferner betrifft die Erfindung auch eine elektronische Recheneinrichtung, wobei die elektronische Recheneinrichtung zum Durchführen eines Verfahrens nach dem ersten Aspekt und/oder nach dem zweiten Aspekt der Erfindung ausgebildet ist. Beispielsweise kann offline die elektronische Recheneinrichtung bereitgestellt werden, um das Verfahren nach dem ersten Aspekt der Erfindung durchzuführen. Ferner kann eine weitere elektronische Recheneinrichtung bereitgestellt werden, um dann wiederum online das Verfahren, insbesondere in dem Fahrzeug, entsprechend durchzuführen. Bevorzugt kann die elektronische Recheneinrichtung zum Durchführen des ersten Aspekts der Erfindung unterschiedlich ausgebildet sein als die elektronische Recheneinrichtung gemäß dem zweiten Aspekt der Erfindung. Insbesondere ist die zweite elektronische Recheneinrichtung mit geringerer Rechenkapazität und Rechenleistung ausgestattet.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist insbesondere gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Weitere Ausführungsformen der erfindungsgemäßen elektronischen Recheneinrichtung folgen unmittelbar aus den verschiedenen Ausgestaltungen des erfindungsgemäßen Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auf entsprechende Ausführungsformen der erfindungsgemäßen elektronischen Recheneinrichtung übertragen. Insbesondere ist die erfindungsgemäße elektronische Recheneinrichtung zum Durchführen eines erfindungsgemäßen Verfahrens ausgebildet oder programmiert. Insbesondere führt die erfindungsgemäße elektronische Recheneinrichtung das erfindungsgemäße Verfahren nach dem ersten Aspekt und/oder dem zweiten Aspekt der Erfindung durch.

Unter einem elektronischen Fahrzeugführungssystem zum beispielsweise teilweise autonomen Betrieb des Fahrzeugs kann ein elektronisches System verstanden werden, das dazu eingerichtet ist, ein Fahrzeug vollautomatisch oder vollautonom zu führen, insbesondere ohne, dass ein Eingriff in eine Steuerung durch einen Fahrer erforderlich ist. Das Fahrzeug führt alle erforderlichen Funktionen, wie Lenk-, Brems- und/oder Beschleunigungsmanöver, die Beobachtung und Erfassung des Straßenverkehrs sowie entsprechende Reaktionen automatisch durch. Insbesondere kann das elektronische Fahrzeugführungssystem einen vollautomatischen oder vollautonomen Fahrmodus des Fahrzeugs nach Stufe 5 der Klassifizierung für den automotiven Bereich implementieren. Unter einem elektronischen Fahrzeugführungssystem kann auch ein Fahrerassistenzsystem (englisch: "driver advisory system", DAS) verstanden werden, welches den Fahrer beim teilweise automatisierten oder teilautonomen Fahren unterstützt. Insbesondere kann das elektronische Fahrzeugführungssystem einen teilweise automatisierten oder teilautonomen Fahrmodus nach den Stufen 1 bis 4 gemäß für den automotiven Bereich implementieren.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Die wenigstens teilweise automatische Fahrzeugführung kann es daher beinhalten, das Fahrzeug gemäß eines vollautomatischen oder vollautonomen Fahrmodus der Stufe 5 für den automotiven Bereich zu führen. Die wenigstens teilweise automatische Fahrzeugführung kann auch beinhalten, das Fahrzeug gemäß eines teilweise automatisierten oder teilautonomen Fahrmodus nach den Stufen 1 bis 4 für den automotiven Bereich zu führen.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit/elektronische Recheneinrichtung kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Dabei zeigen:
- FIG 1: ein schematisches Blockdiagramm gemäß einer Ausführungsform des Verfahrens;
- FIG 2: ein weiteres schematisches Blockdiagramm gemäß einer Ausführungsform einer künstlichen Intelligenz; und
- FIG 3: ein weiteres schematisches Blockdiagram gemäß einer Ausführungsform einer künstlichen Intelligenz.

In den Figuren sind gleiche oder funktionsgleiche Elemente mit den gleichen Bezugszeichen versehen.

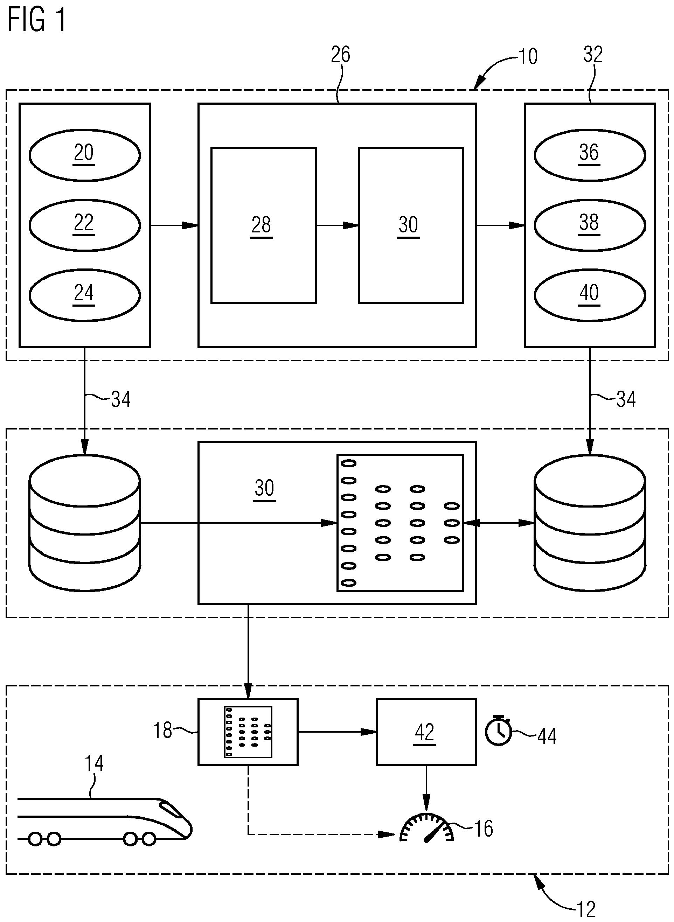

FIG 1 zeigt ein schematisches Ablaufdiagramm gemäß einer Ausführungsform des Verfahrens. Insbesondere zeigt die FIG 1 eine erste elektronische Recheneinrichtung 10 sowie eine zweite elektronische Recheneinrichtung 12. Die erste elektronische Recheneinrichtung 10 ist beispielsweise offline bereitgestellt und die zweite elektronische Recheneinrichtung 12 ist beispielsweise online, insbesondere an Bord eines Fahrzeugs 14, was im vorliegenden Ausführungsbeispiel insbesondere ein Zug ist, ausgebildet.

Insbesondere zeigt die FIG 1 einen Überblick über beispielsweise ein Beschleunigungskonzept für eine Trajektorienplanung 16, beispielsweise mit entsprechenden Beschleunigungswerten für das Fahrzeug 14.

Insbesondere zeigt die FIG 1 ein Verfahren zum Trainieren einer künstlichen Intelligenz 18 für die Erzeugung der Trajektorienplanung 16 einer Trajektorie des Fahrzeugs 14 mittels einer elektronischen Recheneinrichtung 10, 12, vorliegend insbesondere mittels der ersten elektronischen Recheneinrichtung 10. Es erfolgt das Empfangen von statischen Daten 20, 22 der Trajektorie und das Empfangen von dynamischen Daten 24 der Trajektorie mittels der elektronischen Recheneinrichtung 10, 12. Es erfolgt das Auswerten der statischen Daten 20, 22 und der dynamischen Daten 24 mittels eines mathematischen Optimierungsverfahrens 26, vorliegend insbesondere dargestellt auf Basis eines mathematischen Modells 28 und einer Lösungsbibliothek 30, mittels der elektronischen Recheneinrichtung 10, 12. Es erfolgt das Übermitteln der empfangenen Daten 20, 22, 24 und von ausgewerteten Daten 32 als Trainingsdaten 34 an die künstliche Intelligenz 18 mittels der elektronischen Recheneinrichtung 10, 12. Es wird dann die künstliche Intelligenz 18 mit den übermittelten Trainingsdaten 34 mittels der elektronischen Recheneinrichtung 10, 12 trainiert.

FIG 1 zeigt insbesondere, dass Streckeninformationen 20 der Trajektorie als statische Daten 20, 22 empfangen werden. Ferner werden Fahrzeuginformationen 22 des Fahrzeugs 14 als statische Daten 20, 22 empfangen. Des Weiteren ist gezeigt, dass ein Zeitplan und/oder Zeitplangrenzen für die Trajektorie als dynamische Daten 24 empfangen werden. Als Ausgangsdaten können beispielsweise Statusinformationen 36 des Fahrzeugs 14, effektive Beschleunigungsdaten 38 des Fahrzeugs 14 sowie Beschleunigungssignale 40 für das Fahrzeug 14 erzeugt werden.

Ferner kann insbesondere vorgesehen sein, dass die Trajektorie bezüglich einer maximalen Bremseffizienz des Fahrzeugs 14 und/oder einer minimalen Abweichung eines Zeitplans und/oder eines minimalen Energieverbrauchs des Fahrzeugs 14 auf der Trajektorie mittels des Optimierungsverfahrens 26 optimiert wird.

Insbesondere ist somit vorgesehen, dass die vom Optimierungsverfahren 26 erzeugten Eingangs- und Ausgangsdaten 32 als Trainingsdaten 34 für die Erstellung der künstlichen Intelligenz 18 für die optimale Beschleunigungstrajektorie gespeichert werden. Sobald die künstliche Intelligenz 18 trainiert ist, kann es auf einem realen Fahrzeugetriebssystem, beispielsweise vorliegend der zweiten elektronischen Recheneinrichtung 12, eingesetzt werden, um die gelernten Signale innerhalb von Millisekunden abzurufen. Diese vorhergesagten Beschleunigungssignale 40 können als Startwerte für eine leichtgewichtige Wiederholung der mathematischen Optimierung verwendet werden, was vorliegend durch eine weitere mathematische Optimierung 42 gezeigt ist, um die endgültigen Steuersignale zu erzeugen, oder alternativ direkt angewendet werden, wenn die Modellgenauigkeit hoch genug ist. Dies ist vorliegend insbesondere durch einen Block 44 gezeigt.

Insbesondere zeigt somit die FIG 1, dass die klassische Optimierungsschleife, bei der eine zeitlich gerastete Sequenz von Beschleunigungssignalen 40 für einen gegebenen Satz von Problembeschreibungen und -grenzen, beispielsweise aktuelle Fahrzeugmasse, Entfernung bis zum nächsten Halt, Geschwindigkeits- und Beschleunigungsleistungsbeschränkung, Durchfahrtszeitfenster oder dergleichen, derart optimiert wird, dass ein Satz vordefinierter Key-Performance-Indikatoren optimiert wird, beispielsweise die minimale Abweichung vom Zeitplan, maximale Bremseffizienz, minimaler elektrischer Stromverbrauch. Da diese Art der Optimierung in der Regel ressourcenintensiv ist und bis zu mehreren Minuten oder länger dauern kann, wird diese insbesondere offline auf einem leistungsfähigen Rechenserver, vorliegend insbesondere der ersten elektronischen Recheneinrichtung 10, durchgeführt.

Der neue Ansatz besteht insbesondere darin, dass in der klassischen Optimierungsschleife erzeugte Eingangs- und Ausgangsdaten 32 derart genutzt werden, indem die entsprechenden Sätze von Problembeschreibungen und die daraus resultierenden optimalen Beschleunigungskurven in einem Datenspeicher gespeichert werden. Im folgenden Schritt wird die künstliche Intelligenz 18, insbesondere basierend auf einem neuronalen Netz, trainiert, das in der Lage ist, die optimalen Beschleunigungskurven für jede beliebige Kombination von Problembeschreibungsmerkmalen zu reproduzieren. Das Training eines solchen KI-Modells erfordert ebenfalls eine Menge Rechenleistung und Trainingsdaten 34. Daher wird dies auch offline, insbesondere mittels der ersten elektronischen Recheneinrichtung 10, ausgeführt.

Der Hauptvorteil dieses Ansatzes wird deutlich, sobald das Training der künstlichen Intelligenz 18 abgeschlossen ist und das trainierte Modell in das ressourcenkritische Steuerungs-/Betriebssystem des Fahrzeugs 14 eingesetzt wird, insbesondere dargestellt durch die zweite elektronische Recheneinrichtung 12. Hier kann das eingesetzte Modell sehr schnell, typischerweise in Millisekunden, ausgeführt werden, um ein im Wesentlichen optimales Beschleunigungssteuersignal für die gegebenen Eingangs- und Randparameter der aktuellen Situation zu reproduzieren. Da die künstliche Intelligenz 18 typischerweise nur eine Annäherung an die realen Lernziele, insbesondere den sogenannten Ground Truth, liefert, hängt es von der Genauigkeit der künstlichen Intelligenz 18 ab, ob die ausgegebene Beschleunigungssequenz direkt vom Kontrollsystem beziehungsweise Zugführer verwendet wird oder ob diese als Startwert in eine weitere Runde der mathematischen Optimierung eingespeist wird. Da davon ausgegangen werden kann, dass diese Startwerte bereits nahe an den optimalen Werten liegen, könnte dieses Verfahren dazu beitragen, die ansonsten zeitaufwendige Optimierung um große Faktoren zu beschleunigen. Dies würde dazu beitragen, dass präzise Optimierungsalgorithmen auch auf leistungsschwacher Edge-Hardware, wie zum Beispiel Low-Level-Beschleunigungs-/Bremsreglern, durchführbar werden.

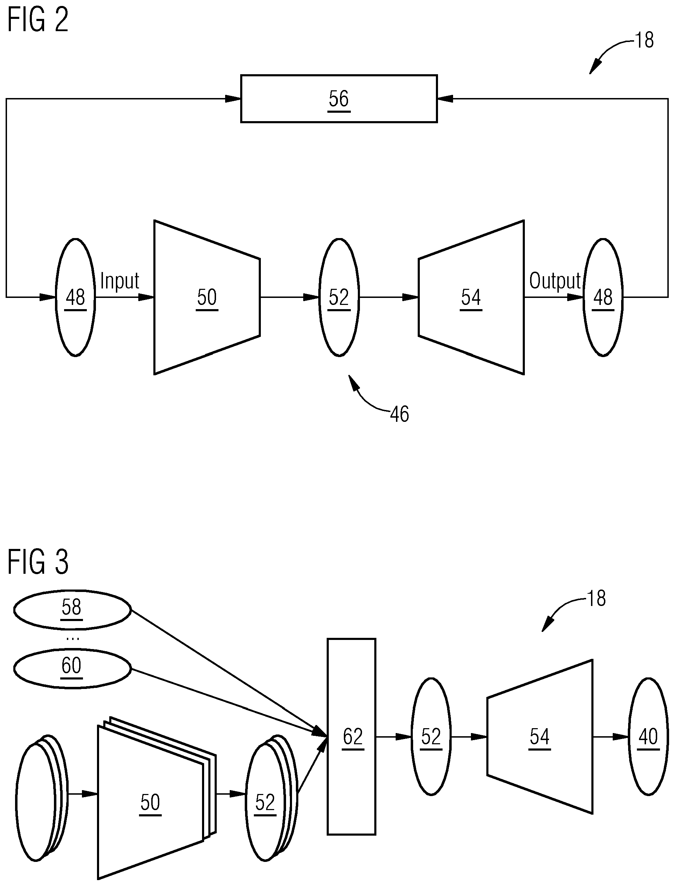

FIG 2 zeigt ein weiteres schematisches Blockschaltbild insbesondere der künstlichen Intelligenz 18. Insbesondere zeigt die FIG 2 zur Verringerung der Merkmalsdimensionalität, dass die künstliche Intelligenz 18 als Autoencoder 46 ausgebildet ist. Eine Sequenz beziehungsweise ein Vektor von Eingabedaten 48 wird von einem Encoder 50 auf einen latenten Raum 52 mit viel geringerer Dimensionalität abgebildet. Von dort aus kann die Information über die sogenannte transponierte Decodereinheit beziehungsweise einen Decoder 54 entpackt werden, um die ursprüngliche Form des Eingangssignals wieder herzustellen. Dabei entsteht insbesondere ein sogenannter Rekonstruktionsfehler 56.

Insbesondere ist in der Praxis das Training der künstlichen Intelligenz 18 zur Vorhersage optimaler Beschleunigungssequenzen, wie oben beschrieben, beliebig komplex. Dies liegt vor allem daran, dass diese Sequenzen in der Regel aus bis zu hunderten von Gitterpunkten bestehen, verteilt auf einer räumlichen oder zeitlichen Gitterdarstellung des Streckenabschnitts. Außerdem variieren die Längen und Eigenschaften der einzelnen Streckenabschnitte stark, was zu völlig unterschiedlichen Formen und Skalen der resultierenden, im Wesentlichen optimalen Beschleunigungssignale führt. Darüber hinaus liegen viele der Eigenschaften, die die Optimierungsaufgaben definieren, wie zum Beispiel Gleisneigungsprofile oder Geschwindigkeitsgrenzen als Funktion von Zeit und Raum, ebenfalls als hochdimensionale Zeitreihen/Vektorinformationen vor. Schließlich hängt der Optimierungshorizont von der Entfernung zwischen der aktuellen Position entlang der Strecke und dem Ende des Streckenabschnitts, typischerweise dem nächsten Bahnhof, ab, was das Problem variabler Merkmalsvektorgrößen aufwirft, die als Eingaben für die künstliche Intelligenz 18 verwendet werden.

Um einen Großteil der genannten Probleme zu überwinden, wird insbesondere die Kombination von neuronalen Netzwerkkomponenten vorgeschlagen, die sich speziell mit dem Problem der Vorhersage einer Beschleunigungssequenz mit variierender Länge des Streckenabschnitts befasst. Die Grundidee besteht dabei darin, eine Autoencoder-Modellstruktur zu verwenden, die aus zwei Einheiten eines faltungsneuronalen Netzes (CNN) besteht, die als Encoder 50 beziehungsweise Decoder 54 für große Zeitreiheninformationen fungieren, wie zum Beispiel zeitlich gerastete Beschleunigungssignale 40 oder Gleisgradientenprofile. Dies ist insbesondere in FIG 2 gezeigt, für das Beispiel der Beschleunigungssequenz, wenn beide CNN-Einheiten für die Codierung beziehungsweise Decodierung der Signalinformation in/aus einem hoch-dimensionalen latenten Raum 52 trainiert werden. Hierbei wird der Autoencoder durch Minimierung des Signalrekonstruktionsverlusts beziehungsweise des Rekonstruktionsfehler 52 trainiert, der sich aus einem punktweisen Vergleich der Eingangs- und Ausgangssignale ergibt. Im Autoencoder-Modell sind der Encoder 50 und/oder der Decoder 54 vertauschte Einheiten, um die Dimensionsidentität der Eingangs-und Ausgangssignalvektoren zu gewährleisten.

FIG 3 zeigt ein weiteres schematisches Blockschaltbild gemäß einer Ausführungsform der künstlichen Intelligenz 18. Insbesondere ist in der FIG 3 das bereits trainierte neuronale Netzwerk beziehungsweise die trainierte künstliche Intelligenz 18 dargestellt, welche dann wiederum in der zweiten elektronischen Recheneinrichtung 12 ausgeführt wird. Beispielsweise können Eingangsparameter, wie Masse 58 des Fahrzeugs 14 sowie eine Streckenlänge 60 genutzt werden. Es werden dann insbesondere unterschiedliche Encoder 50 bereitgestellt, welche beispielsweise das Gradientenprofil, die Geschwindigkeitsbegrenzungen sowie Zeitpläne über einen jeweiligen Encoder 50 auf einen jeweiligen latenten Raum 52 abbilden. Durch beispielsweise ein sogenanntes Feed-Forward neuronales Netz 62 erfolgt dann wiederum eine erneute Erzeugung des latenten Raums 52 durch das Fusionieren der einzelnen latenten Räume 52, sowie beispielsweise der Masse 58 und der Streckenlänge 60. Der Decoder 54 decodiert wiederum diesen latenten Raum 52 und erzeugt beispielsweise entsprechende Beschleunigungssignale 40. Insbesondere zeigt die FIG 3 somit ein kumuliertes Modell der Beschleunigungs-/Bremssequenz für gegebene Optimierungsaufgabenmerkmale. Die CNN-basierten Encoder/Decoder-Einheiten werden aus dem vorherigen Schritt des Trainings von Autoencoder-Modellen zur Dimensionsreduktion von vektorartigen Eingangsinformationen übernommen. Es werden beispielsweise nur die Gewichte in den zentralen Feed-Forward-Netzen 62 trainiert, während alle anderen auf ihren Werten aus dem vorangegangenen Autoencoder-Schritt beruhen.

Insbesondere dient bei erfolgreichem Training der Autoencoder als Datenkompressor - mit allen notwendigen Informationen, die zur Rekonstruktion des ursprünglichen Signals benötigt werden, codiert in seinem niedrigdimensionalen, latenten Raum 52. Dasselbe Verfahren und dieselbe Lernarchitektur, wie in der FIG 2 dargestellt, kann dann auf vektorähnliche Eingabeparameter des Optimierungsproblems angewandt werden, zum Beispiel Gleisgradienten, Geschwindigkeitsbegrenzungen entlang der Strecke und eine Liste von Durchfahrtszeitbeschränkungen für die Zugtrajektorie. Nach dem Training der einzelnen Autoencoder-Module für vektorähnliche Eingangsmerkmale kann das kombinierte Modell, wie in der FIG 3 dargestellt, erstellt werden.

Auf der linken Seite der FIG 3 werden alle notwendigen Informationen über das bevorstehende Streckensegment sowie der aktuelle Fahrzeugzustand als Eingangsmerkmale in das Modell eingespeist. Die Daten, insbesondere Zeitreihen, werden mit den entsprechenden vortrainierten Encoder-Modulen aus dem vorherigen Schritt verbunden, um die Größe zu komprimieren. Skalare Eingangsgrößen, wie die aktuelle Fahrzeugmasse, hauptsächlich beeinflusst durch die aktuelle Passagierlast, oder die Länge des Streckensegments, werden direkt mit einem vorwärts gerichteten neuronalen Netz verbunden, das den Kern des kombinierten KI-Modells bildet. Der Ausgang des neuronalen Feed-Forward-Netzes 62 hat die gleiche Dimension wie der latente Raum 52, der für das vortrainierte Beschleunigungsdecodermodell verwendet wird, was die Rücktransformation, die sogenannte Expansion, in die vollständige Beschleunigungssignalsequenz erleichtert. In diesem Aufbau hat nur das Feed-Forward-neuronale Netz 62 trainierbare Gewichte, während alle anderen CNN-basierten Encoder-Decoder-Komponenten auf die Werte festgelegt sind, die in den vorherigen Trainingsschritten der einzelnen Module abgeleitet wurden. Der Vorteil dieser Architektur besteht darin, dass die Komplexität der gesamten Lernaufgabe darauf reduziert wird, nur eine Abbildung zwischen niedrigdimensionalen latenten Räumen 52 der jeweiligen Eingänge und Ausgänge zu lernen.

Insbesondere dient der vorgestellte KI-gestützte Ansatz entweder als Ersatz oder als Beschleuniger für die Berechnung einer im Wesentlichen optimalen Beschleunigungs-/Bremssteuerungssequenz für einen anstehenden Streckenabschnitt. Im Vergleich zu bestehenden Lösungen kann die Vorhersage solcher Sequenzen die Rechenzeit beziehungsweise den Rechenaufwand massiv reduzieren, was dazu beitragen kann, die energiesparende Trajektorienplanung 16 mit einer viel höheren Frequenz zu aktualisieren und damit besser und schneller auf unvorhergesehene Ereignisse und Fahrplanunterbrechungen zu reagieren. Ferner ermöglicht dies auch die Wiederverwendung von Daten, die ohnehin durch klassische Optimierungsverfahren in der Vergangenheit und in der Zukunft erzeugt wurden/werden. Sobald das Modell auf dem Fahrzeugsteuerungssystem eingesetzt wird, ermöglicht es eine kurze Inferenzzeit und erfordert nur geringe Hardware-Anforderungen, was den Ansatz unter solchen Bedingungen vertretbar macht.

## Patentansprüche

1. Verfahren zum Trainieren einer künstlichen Intelligenz (18) für die Erzeugung einer Trajektorienplanung (16) einer Trajektorie eines Fahrzeugs (14) mittels einer elektronischen Recheneinrichtung (10, 12), mit den Schritten:
- Empfangen von statischen Daten (20 ,22) der Trajektorie und dynamischen Daten (24) der Trajektorie mittels der elektronischen Recheneinrichtung (10, 12);
- Auswerten der statischen Daten (20, 22) und der dynamischen Daten (24) mittels eines mathematischen Optimierungsverfahrens (26) mittels der elektronischen Recheneinrichtung (10, 12) ;
- Übermitteln der empfangenen Daten (20, 22, 24) und der ausgewerteten Daten (32) als Trainingsdaten (34) an die künstliche Intelligenz (18) mittels der elektronischen Recheneinrichtung (10 ,12); und
- Trainieren der künstlichen Intelligenz (18) mit den übermittelten Trainingsdaten (34) mittels der elektronischen Recheneinrichtung (10, 12).

2. Verfahren nach Anspruch 1, **dadurch gekennzeichnet, dass** Streckeninformationen (20) der Trajektorie als statische Daten (20, 22) empfangen werden.

3. Verfahren nach Anspruch 1 oder 2, **dadurch gekennzeichnet, dass** Fahrzeuginformationen (22) des Fahrzeugs (14) als statische Daten (20, 22) empfangen werden.

4. Verfahren nach einem der vorhergehenden Ansprüche, **dadurch gekennzeichnet, dass** ein Zeitplan für die Trajektorie und/oder Zeitplangrenzen für die Trajektorie als dynamische Daten (24) empfangen werden.

5. Verfahren nach einem der vorhergehenden Ansprüche, **dadurch gekennzeichnet, dass** die Trajektorie bezüglich einer maximalen Bremseffizienz des Fahrzeugs (14) und/oder einer minimalen Abweichung eines Zeitplans und/oder einem minimalen Energieverbrauch des Fahrzeugs (14) auf der Trajektorie mittels des Optimierungsverfahren (26) optimiert wird.

6. Verfahren nach einem der vorhergehenden Ansprüche, **dadurch gekennzeichnet, dass** die künstliche Intelligenz (18) für ein als Zug ausgebildetes Fahrzeug (14) bereitgestellt wird.

7. Verfahren nach Anspruch 6, **dadurch gekennzeichnet, dass** für die Trajektorienplanung (16) zumindest ein Beschleunigungssignal (40) für den Zug mittels der künstlichen Intelligenz (18) ausgegeben wird.

8. Verfahren nach einem der vorhergehenden Ansprüche, **dadurch gekennzeichnet, dass** die künstliche Intelligenz (18) als faltendes neuronales Netzwerk bereitgestellt wird.

9. Verfahren nach Anspruch 8, **dadurch gekennzeichnet, dass** das faltende neuronale Netzwerk als ein Autoencoder (46) bereitgestellt wird.

10. Verfahren zum Betreiben eines Fahrzeugs (14) mittels einer künstlichen Intelligenz (18), welche nach einem der Ansprüche 1 bis 9 trainiert ist.

11. Verfahren nach Anspruch 10, **dadurch gekennzeichnet, dass** ein aktueller Trajektorienparameter der Trajektorie erfasst wird und eine Anpassung der Trajektorienplanung (16) in Abhängigkeit von dem erfassten Trajektorienparameter mittels der künstlichen Intelligenz (18) durchgeführt wird.

12. Verfahren nach einem der Ansprüche 11, **dadurch gekennzeichnet, dass** auf Basis der angepassten Trajektorienplanung (16) ein weiteres Optimierungsverfahren (42) zur weiteren Anpassung der Trajektorie durchgeführt wird.

13. Computerprogrammprodukt mit Programmcodemitteln, welche eine elektronische Recheneinrichtung (10, 12) dazu veranlasst, wenn die Programmcodemittel von der elektronischen Recheneinrichtung (10, 12) abgearbeitet werden ein Verfahren nach einem der Ansprüche 1 bis 9 und/oder nach einem der Ansprüche 10 bis 12 durchzuführen.

14. Computerlesbares Speichermedium mit einem Computerprogrammprodukt nach Anspruch 13.

15. Elektronische Recheneinrichtung (10, 12), wobei die elektronische Recheneinrichtung (10, 12) zum Durchführen eines Verfahrens nach einem der Ansprüche 1 bis 9 und/oder zum Durchführen eines Verfahrens nach einem der Ansprüche 10 bis 12 ausgebildet ist.
